# EUROPEAN PATENT SPECIFICATION

(11) **EP 3 714 220 B1**
(45) Date of publication and mention of the grant of the patent: **15.09.2021**
(21) Application number: 18822005.7
(22) Date of filing: 20.11.2018
(51) Int. Cl.: F24S 20/67, F24S 23/74, F24S 25/67

(54) **A SOLAR ENERGY CONCENTRATING ROOF MODULE AND A SOLAR ENERGY CONVERSION SYSTEM FOR A ROOF**
SOLARENERGIEKONZENTRIERENDES DACHMODUL UND SOLARENERGIEUMWANDLUNGSSYSTEM FÜR EIN DACH
MODULE DE TOIT À CONCENTRATION D'ÉNERGIE SOLAIRE ET SYSTÈME DE CONVERSION D'ÉNERGIE SOLAIRE POUR TOIT

(30) Priority: 20.11.2017 NO 20171848
(43) Date of publication of application: 30.09.2020
(73) Proprietor: NODIN-INNOVATION AS, 3172 Vear (NO)
(72) Inventor: LIMSETH, Finn, N-3138 Skallestad (NO); LIMSETH, Gina, N-3138 Skallestad (NO)
(74) Representative: Onsagers AS
(86) International application number: PCT/EP2018/081907
(87) International publication number: WO 2019/097081

(56) References cited:
- WO-A1-99/23424
- US-A- 4 423 719
- US-A- 4 602 853

## Description

### TECHNICAL FIELD

The present invention relates to a solar energy concentrating roof module and a solar energy conversion system for a roof.

### BACKGROUND

Solar energy concentrating arrangements with a concave, parabolic reflector, wherein a pipe is arranged in alignment with the focal axis of the parabolic reflector, are known in the art. Such arrangements concentrate the solar energy at the location of the pipe. A heating medium flowing in the pipe, e.g. water, will thus be heated by the solar energy. The heated medium may then be utilized to a suitable purpose. An example of a parabolic trough solar reflector using these basic principles has been described in US-4 611 575.

Solar energy collectors for mounting on the roof of buildings are known in the art. For instance, US-2016/0003495 relates to a solar absorbing unit for heating a liquid medium as an integrated part of a roof construction. A transparent surface layer of roofing tiles is supported by a batten, which includes a channel configuration with a flowing liquid medium that is heated by the solar energy.

US 4 602 853 A discloses a solar energy concentrating roof module according to the preamble of claim 1.

### SUMMARY

There is a need for providing a solar energy concentrating roof module and a solar energy conversion system which overcome various disadvantages of the related art. The present invention has been defined in the accompanying claims.

### BRIEF DESCRIPTION OF THE DRAWINGS

Possible features and advantages of the invention will be explained in closer detail in the detailed description below, with reference to the non-limiting examples illustrated in the figures.
Figure 1 is a schematic side view of a building with a roof that is provided with a system which includes solar energy concentrating roof modules.
Figure 2 is a schematic perspective view illustrating principles of a solar energy concentrating roof module.
Figure 3 is a schematic perspective view illustrating further principles of a solar energy concentrating roof module.
Figure 4 is a schematic sectional view illustrating further principles of a solar energy concentrating roof module.
Figure 5 is a is a schematic perspective view illustrating principles of an additional support device.
Figure 6 is a schematic perspective view illustrating further principles of solar energy concentrating roof modules.
Figure 7 is a schematic side view illustrating principles of a solar energy conversion system for a roof.

### DETAILED DESCRIPTION

The invention will be described in the following as non-limiting examples, which illustrate principles of the invention as claimed. Identical reference numerals refer to identical or similar elements throughout the figures.

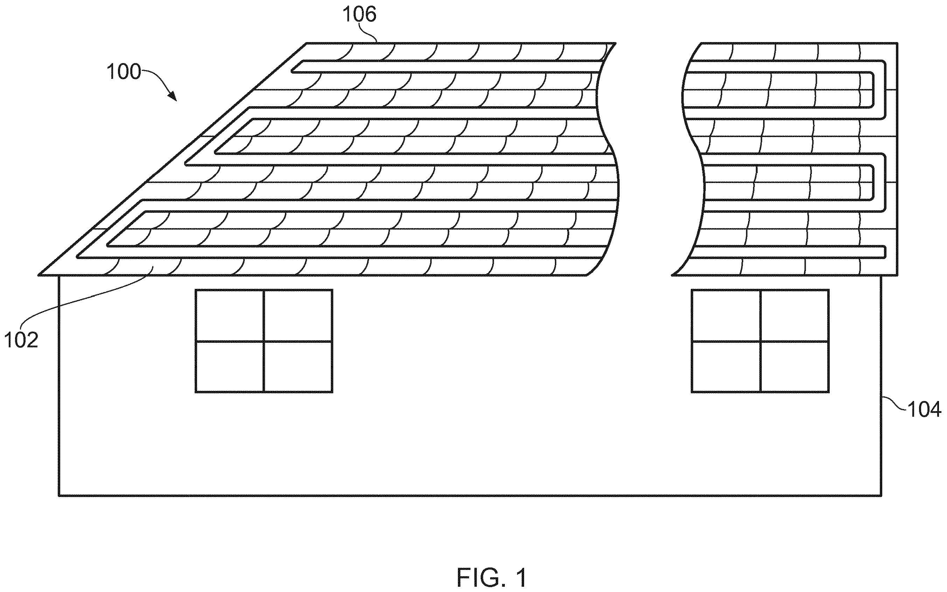

Figure 1 is a schematic side view of a building with a roof that is provided with a system which includes solar energy concentrating roof modules.

A building 104, such as a domestic house, is provided with a roof. The system and roof module of the invention may be used on any types of buildings and roofs, including constructions with various roof angles, shapes and sizes.

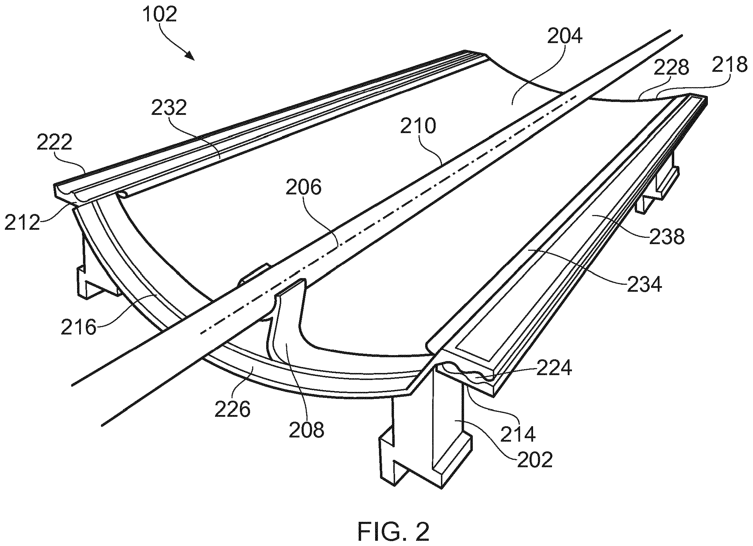

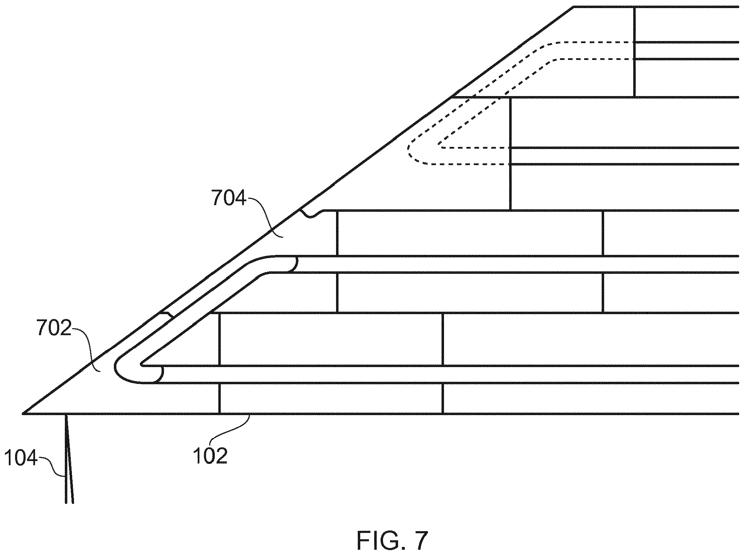

A solar energy conversion system 100 for the roof is provided. The system 100 includes a plurality of interconnected solar energy concentrating roof modules 102, 106. The roof modules are configured to concentrate the solar energy at the location of a pipe, or a series of pipe sections, arranged on the roof modules. As illustrated, roof modules of a smaller length have been denoted by 102, while similar roof modules of a larger length are denoted by 106. The solar concentrating roof modules have been further described below with reference to figures 2-6. Further details of the solar energy conversion system 100 have also been described below with reference to figure 7.

Although not shown in figure 1, the plurality of fluidly interconnected pipes are filled with a heating medium, and they are further fluidly connected to a heat exchanger and optionally a pump, resulting in a closed fluid circuit. The pipes are made of metal, e.g. aluminium, steel or copper, and are advantageously covered with a coating which improves their energy absorption, e.g. a black coating, e.g. by anodizing.

Figure 2 is a schematic perspective view illustrating principles of a solar energy concentrating roof module.

The solar energy concentrating roof module 102 comprises a support device 202 which, when installed, will rest on the roof, and/or be secured to the roof. As shown, the support device 202 may include legs provided at the underside of a reflector 204, for instance, four legs, each provided at a respective corner of the roof module 102. Alternatively, the legs may be arranged at a greater distance from the outer edges of the roof module 102.

The reflector device 204 is arranged on the support device 202. The reflector device 204 and the support device may be formed as separate, interconnected elements or they may be manufactured as one single device. Hence, they should primarily be considered as functional portions of the roof module 102, and not necessarily as separate, distinguishable components.

The reflector device 204 has a concave, parabolic cylindric upper surface. The parabolic cylindric upper surface has a focal axis 206. This has the effect that energy in the form of light, typically sunlight, reflected from the reflector device 204, is concentrated along the focal axis 206.

The roof module 102 further includes at least one pipe retaining device 208. Although not shown in figure 1, another pipe retaining device will typically be included in another roof module 102 connected to the illustrated roof module at its opposite end. Alternatively or in addition, another pipe retaining device may be included at the opposite end of the illustrated roof module 102.

Hence, the pipe retaining device(s) 208 may include a first pipe retaining device arranged at the first transversal edge 216 of the roof module and optionally a second pipe retaining device arranged at the second transversal edge 218 of the roof module 102.

The pipe retaining device(s) 208 is/are configured to retain a straight pipe portion 210 in alignment with the focal axis 206. This has the effect that the heating medium contained in the pipe, such as water, will be effectively heated by the reflected solar energy, since the energy will be collected and concentrated along the reflector device's focal axis 206.

The roof module 102 has a first longitudinal edge 212 and a second longitudinal edge 214. The longitudinal edges 212, 214 are advantageously parallel with the focal axis 206, although alternatives exist.

The roof module also has a first transversal edge 216 and a second 218 transversal edge. The transversal edges 216, 218 are perpendicular to the longitudinal edges 212, 214.

The roof module 102 further comprises connection profiles 222, 224 provided at the longitudinal edges 212, 214. Each connection profile 222, 224 enables the longitudinal edge of the present, illustrated roof module 102 to be connected to a longitudinal edge of another, not illustrated roof module.

To this end, the connection profiles 222, 224 provided at the longitudinal edges 212, 214 may include a tongue profile 222 at the first longitudinal edge 212 and a groove profile 224 at the second longitudinal edge 214, or vice versa.

Connection profiles 226, 228 are also provided at the transversal edges 216, 218 of the roof module 102. In particular, the connection profiles 226, 228 provided at the transversal edges 216, 228 may include a tongue profile 226 at the first transversal edge 216 and a groove profile 228 at the second longitudinal edge 218, or vice versa.

All the connection profiles, both at the longitudinal and transversal edges, are arranged to provide waterproof connections between the roof modules 102.

The reflector device 204 includes a reflective foil or coating on its upper surface. The reflective foil or coating may particularly advantageously include a removable foil, which is attached to the upper surface of the reflector device 204, for instance by means of protruding lips 232, 234 arranged at the first 212 and second 214 longitudinal edges. This has the advantage that maintenance of the roof modules or the system is facilitated, since the exchange of a foil involves less effort than exchanging or renewing the roof modules themselves. Alternatively, a non-removable foil or coating may be applied to the upper surface of the reflector device 204.

Advantageously, an additional support device 402 may be provided under the reflector 204 to provide further stable, durable support of the reflector. The additional support device may particularly advantageously be removably attachable to the lower surface of the reflector.

Advantageously, a protective strip, for instance of rubber, may be provided at the upper side of the reflector, preferably along the second longitudinal edge, or alternatively, along the first longitudinal edge, or still alternatively, along both the longitudinal edges. The protective strip may be arranged to support a protective cover.

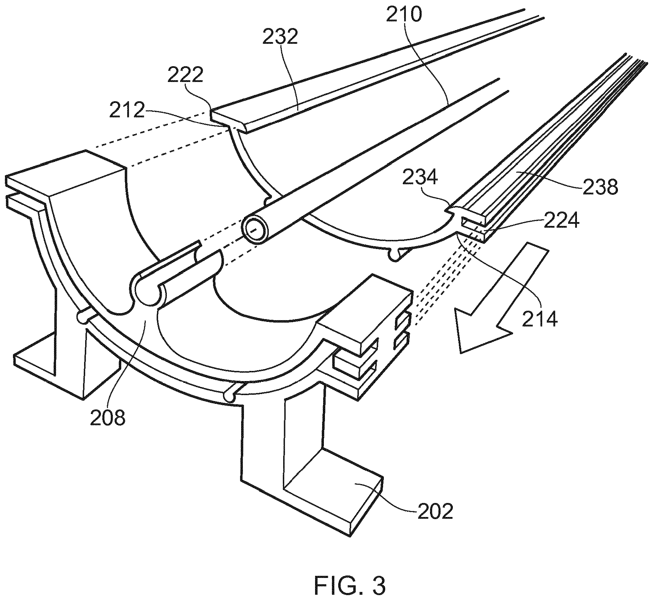

Figure 3 is a schematic perspective view illustrating further principles of a solar energy concentrating roof module.

In the particular aspect illustrated in figure 3, the support device 202 is formed as an interconnecting device which joins two reflector devices and two pipe portions. This is particularly useful when the roof module 102 is provided with extended length.

As illustrated in figure 3, the support device 202 includes two legs, and the pipe retaining device 208 is formed as an integral part of the support device 202. The reflector devices may be slidingly connected into grooves formed in the support device 202.

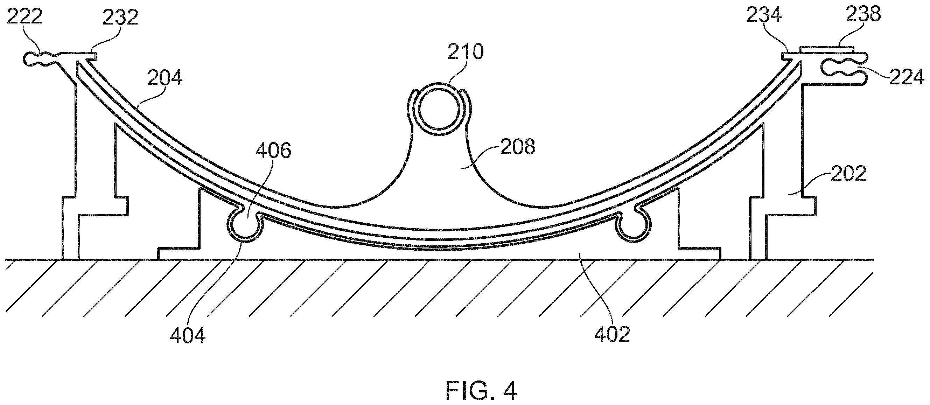

Figure 4 is a schematic sectional view illustrating further principles of a solar energy concentrating roof module.

In the particular aspects illustrated in figure 4, a separate, additional support device 402 is provided under the reflector device 204. The additional support device is removably attachable to the lower surface of the reflector by means of a "clip-on, clip-off" connection illustrated at 404, 406.

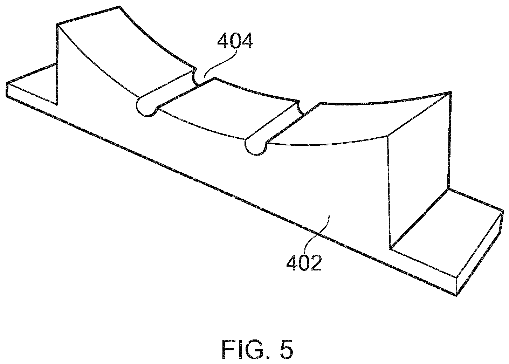

Figure 5 is a schematic perspective view illustrating further possible principles of the additional support device 402. Grooves 404 are provided at the top of the additional support device 402, to receive corresponding, similar protruding portions at the underside of the reflector device 204, resulting in the removable "clip-on, clip-off" attachment means as mentioned above with reference to figure 4.

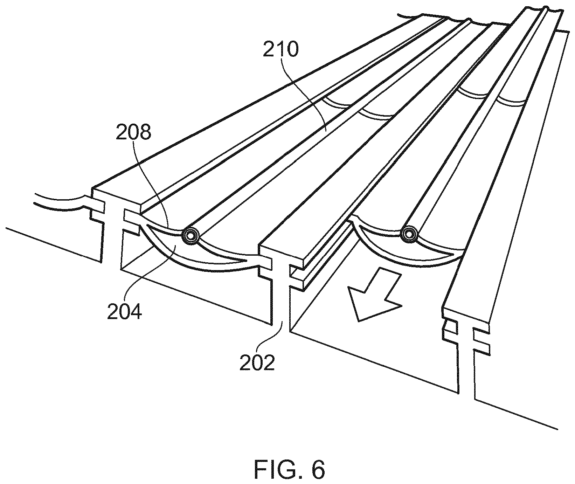

Figure 6 is a schematic perspective view illustrating further principles of solar energy concentrating roof modules.

In the particular aspects illustrated in figure 6, the support device 202 is provided as elongated profiles with longitudinal grooves configured to receive the longitudinal edges of the reflector device 204 in a sliding manner, suggested by the arrow in figure 6.

Figure 7 is a schematic side view illustrating principles of a solar energy conversion system for a roof.

The solar energy conversion system for a roof comprises a plurality of interconnected solar energy concentrating roof modules 102 of the type described above with reference to figure 2-6. The system further includes a plurality of pipes attached to the pipe retaining devices 208 of the roof modules. The plurality of pipes are fluidly interconnected and filled with a heating medium, e.g. water, optionally with an anti-freeze solution to deal with freezing. The plurality of pipes are further fluidly connected to a heat exchanger and optionally a pump. This results in a closed fluid circuit, whereby solar energy concentrated by the reflector devices is absorbed by the medium-filled tubes and transported to the heat exchanger, where the energy may be utilized, e.g. for heating the interior of the building, or for another useful purpose.

As shown in figure 7, the system may further include at least one terminal module 702, 704. Each terminal module 702, 704 includes a pipe connection to provide fluid interconnection between the pipe sections of a first roof module and a second roof module, the first and second roof modules being interconnected at their longitudinal edges.

The solar energy conversion system may advantageously also comprise a transparent protective cover, e.g. made of glass or a suitable transparent plastic material, arranged on the upper side of the roof modules.

In a particular advantageous aspect, the protective cover includes a Fresnel lens or a plurality of Fresnel lenses.

The disclosed roof modules and system may be placed on top of an existing roof, independent of the roof type, or it can replace traditional roof tiles completely.

The support device, i.e., the base of the roof modules, may advantageously be made of a suitable plastic, which is both lightweight and very cost-effective.

The extensive use of "clip-on, clip-off" between various elements in the system facilitates initial installation, as well as replacing or expanding with more roof modules afterwards.

The pipes may be clicked in place in the center of the roof modules, so that the thermal energy is focused on the tubes. A particular advantage is the flexible and modular design of the system, and the ability of adapting the system so that it can fit any roof shapes/areas both horizontally and vertically.

In addition to the main purposes of more well-known applications such as house heating, water heating etc., the system may also be particularly adapted for application in developing countries, and areas with limited energy supply such as war zones and refugee camps.

The present roof module and system have the advantage that they may be manufactured and installed at low cost. The module and system are environmentally friendly, based on renewable energy and reduces the dependency of fossil energy/fuel. In addition, they may be very light-weight, and completely water proof, which makes it suitable to all types of house roof constructions.

The roof module and system may be adapted to be directly exchangeable with existing roof tiles, in such a way that they may be mounted directly on the same framework as under traditional tiles. The system may be compatible to all climates, and may be adapted for e.g. Nordic climates and/or other challenging regions with snow, wind, rain or dust, in particular by the design of a protective cover.

The invention has been described in detail above as non-limiting examples. It should be understood that the invention can be modified to include various alterations and substitutions. Hence, the invention is not limited by the foregoing detailed description, but by the scope of the claims.

## Claims

1. Solar energy concentrating roof module (102), comprising
a support device (202),
a reflector device (204) arranged on the support device (202),
the reflector device (204) having a concave, parabolic cylindric upper surface, the parabolic cylindric upper surface having a focal axis (206),
at least one pipe retaining device (208), configured to retain a straight pipe portion (210) in alignment with the focal axis (206),
the roof module (102) having a first (212) and a second (214) longitudinal edges and a first (216) and a second (218) transversal edges,
the roof module (102) further comprising connection profiles (222, 224) provided at the longitudinal edges (212, 214), each connection profile (222, 224) enabling connection to a longitudinal edge of another roof module
**characterised in that** connection profiles (226, 228) are also provided at the transversal edges (216, 218), and **in that** all connection profiles, both at longitudinal and transversal edges, are arranged to provide waterproof connections between the roof modules (102).

2. Solar energy concentrating roof module according to claim 1, wherein the first (212) and the second (214) longitudinal edges of the roof module (102) are parallel with the focal axis (206) and the first (216) and the second (218) transversal edges of the roof module (102) are perpendicular to the longitudinal edges (212, 214).

3. Solar energy concentrating roof module according to claim 1 or 2,
wherein the connection profiles (222, 224) provided at the longitudinal edges include a tongue profile (222) at the first longitudinal edge (212) and a groove profile (224) at the second longitudinal edge (214).

4. Solar energy concentrating roof module according to claim 1,
wherein the connection profiles (226, 228) provided at the transversal edges (216, 218) include a tongue profile (226) at the first transversal edge (216) and a groove profile (228) at the second transversal edge (218).

5. Solar energy concentrating roof module according to one of the claims 1-4, wherein the reflector device (204) includes a reflective foil or coating on its upper surface.

6. Solar energy concentrating roof module according to claim 5,
wherein the reflective foil or coating includes a removable foil, attached to the upper surface of the reflector device (204) by means of protruding lips (232, 234) arranged at the first (212) and second (214) longitudinal edges.

7. Solar energy concentrating roof module according to one of the claims 1-6, wherein the support device (202) includes legs provided at the underside of the reflector device (204).

8. Solar energy concentrating roof module according to claim 7,
wherein the legs are provided at respective corners of the roof module (102).

9. Solar energy concentrating roof module according to one of the claims 1-8, further comprising an additional support device (402) provided under the reflector device (204), the additional support device being removably attachable to the lower surface of the reflector device (204).

10. Solar energy concentrating roof module according to one of the claims 1-9, wherein a protective strip (238) is provided at the upper side of the reflector device (204), along the longitudinal edge (214), arranged to support a protective cover.

11. Solar energy concentrating roof module according to one of the claims 1-10, wherein the at least one pipe retaining device (208) includes a first pipe retaining device arranged at the first transversal edge (216) of the roof module and optionally a second pipe retaining device arranged at the second transversal edge (218) of the roof module.

12. Solar energy conversion system for a roof, comprising a plurality of interconnected solar energy concentrating roof modules (102) as set forth in one of the claims 1-11,
a plurality of pipes attached to the pipe retaining devices of the roof modules (102), the plurality of pipes being fluidly interconnected and filled with a heating medium, the plurality of pipes being further fluidly connected to a heat exchanger and optionally a pump, resulting in a closed fluid circuit.

13. Solar energy conversion system according to claim 12,
further comprising at least one terminal module (702, 704) which includes a pipe connection to provide fluid interconnection between the pipe sections of a first roof module and a second roof module, the first and second roof modules being interconnected at their longitudinal edges.

14. Solar energy conversion system according to one of the claims 12 or 13, further comprising a transparent protective cover, arranged on the upper side of the roof modules.

15. Solar energy conversion system according to claim 14, wherein the transparent protective cover includes at least one Fresnel lens.

## Patentansprüche

1. Solarenergiekonzentrierendes Dachmodul (102), umfassend eine Stützvorrichtung (202),
eine Reflektorvorrichtung (204), die auf der Stützvorrichtung (202) angeordnet ist,
wobei die Reflektorvorrichtung (204) eine konkave, parabolische zylindrische obere Fläche aufweist, wobei die parabolische zylindrische obere Fläche eine Brennachse (206) aufweist, mindestens eine Rohrhaltevorrichtung (208), die dazu ausgestaltet ist, einen geraden Rohrabschnitt (210) in einer Linie mit der Brennachse (206) zu halten,
wobei das Dachmodul (102) eine erste (212) und eine zweite (214) Längskante und eine erste (216) und eine zweite (218) Querkante aufweist,
wobei das Dachmodul (102) ferner Verbindungsprofile (222, 224) umfasst, die an den Längskanten (212, 214) bereitgestellt sind, wobei jedes Verbindungsprofil (222, 224) eine Verbindung mit einer Längskante eines anderen Dachmoduls ermöglicht,
**dadurch gekennzeichnet, dass** auch an den Querkanten (216, 218) Verbindungsprofile (226, 228) bereitgestellt sind, und dass alle Verbindungsprofile, sowohl an den Längskanten als auch an den Querkanten, dazu angeordnet sind, wasserdichte Verbindungen zwischen den Dachmodulen (102) bereitzustellen.

2. Solarenergiekonzentrierendes Dachmodul nach Anspruch 1, wobei die erste (212) und die zweite (214) Längskante des Dachmoduls (102) parallel zur Brennachse (206) verlaufen und die erste (216) und die zweite (218) Querkante des Dachmoduls (102) senkrecht zu den Längskanten (212, 214) verlaufen.

3. Solarenergiekonzentrierendes Dachmodul nach Anspruch 1 oder 2,
wobei die an den Längskanten bereitgestellten Verbindungsprofile (222, 224) ein Federprofil (222) an der ersten Längskante (212) und ein Nutprofil (224) an der zweiten Längskante (214) enthalten.

4. Solarenergiekonzentrierendes Dachmodul nach Anspruch 1, wobei die an den Querkanten (216, 218) bereitgestellten Verbindungsprofile (226, 228) ein Federprofil (226) an der ersten Querkante (216) und ein Nutprofil (228) an der zweiten Querkante (218) enthalten.

5. Solarenergiekonzentrierendes Dachmodul nach einem der Ansprüche 1-4,
wobei die Reflektorvorrichtung (204) eine reflektierende Folie oder Beschichtung auf ihrer oberen Fläche enthält.

6. Solarenergiekonzentrierendes Dachmodul nach Anspruch 5, wobei die reflektierende Folie oder Beschichtung eine entfernbare Folie enthält, die an der oberen Fläche der Reflektorvorrichtung (204) mittels vorstehender Lippen (232, 234) befestigt ist, die an der ersten (212) und zweiten (214) Längskante angeordnet sind.

7. Solarenergiekonzentrierendes Dachmodul nach einem der Ansprüche 1-6,
wobei die Stützvorrichtung (202) Beine enthält, die an der Unterseite der Reflektorvorrichtung (204) bereitgestellt sind.

8. Solarenergiekonzentrierendes Dachmodul nach Anspruch 7, wobei die Beine an jeweiligen Ecken des Dachmoduls (102) bereitgestellt sind.

9. Solarenergiekonzentrierendes Dachmodul nach einem der Ansprüche 1-8,
das ferner eine zusätzliche Stützvorrichtung (402) umfasst, die unter der Reflektorvorrichtung (204) bereitgestellt ist, wobei die zusätzliche Stützvorrichtung entfernbar an der unteren Fläche der Reflektorvorrichtung (204) befestigt werden kann.

10. Solarenergiekonzentrierendes Dachmodul nach einem der Ansprüche 1-9,
wobei ein Schutzstreifen (238) an der Oberseite der Reflektorvorrichtung (204) entlang der Längskante (214) bereitgestellt ist, der angeordnet ist, um eine Schutzabdeckung zu stützen.

11. Solarenergiekonzentrierendes Dachmodul nach einem der Ansprüche 1-10,
wobei die mindestens eine Rohrhaltevorrichtung (208) eine erste Rohrhaltevorrichtung, die an der ersten Querkante (216) des Dachmoduls angeordnet ist, und optional eine zweite Rohrhaltevorrichtung, die an der zweiten Querkante (218) des Dachmoduls angeordnet ist, enthält.

12. Solarenergieumwandlungssystem für ein Dach, umfassend eine Vielzahl von miteinander verbundenen solarenergiekonzentrierenden Dachmodulen (102) wie in einem der Ansprüche 1-11 festgelegt,
eine Vielzahl von Rohren, die an den Rohrhaltevorrichtungen der Dachmodule (102) befestigt sind, wobei die Vielzahl von Rohren miteinander in Fluidverbindung stehen und mit einem Heizmedium gefüllt sind, wobei die Vielzahl von Rohren ferner mit einem Wärmetauscher und optional einer Pumpe in Fluidverbindung stehen, wobei ein geschlossener Fluidkreislauf entsteht.

13. Solarenergieumwandlungssystem nach Anspruch 12,
ferner umfassend mindestens ein Anschlussmodul (702, 704), das eine Rohrverbindung enthält, um eine Fluidverbindung zwischen den Rohrabschnitten eines ersten Dachmoduls und eines zweiten Dachmoduls bereitzustellen, wobei das erste und das zweite Dachmodul an ihren Längskanten miteinander verbunden sind.

14. Solarenergieumwandlungssystem nach einem der Ansprüche 12 oder 13,
ferner umfassend eine transparente Schutzabdeckung, die auf der Oberseite der Dachmodule angeordnet ist.

15. Solarenergieumwandlungssystem nach Anspruch 14,
wobei die transparente Schutzabdeckung mindestens eine Fresnellinse enthält.

## Revendications

1. Module de toit (102) concentrateur d'énergie solaire, comprenant
un dispositif de support (202),
un dispositif réflecteur (204) agencé sur le dispositif de support (202),
le dispositif réflecteur (204) ayant une surface supérieure cylindrique parabolique concave, la surface supérieure cylindrique parabolique ayant un axe focal (206),
au moins un dispositif de retenue de tuyaux (208), configuré pour retenir une portion de tuyau droite (210) en alignement avec l'axe focal (206),
le module de toit (102) ayant un premier (212) et un deuxième (214) bord longitudinal et un premier (216) et un deuxième (218) bord transversal,
le module de toit (102) comprenant en outre des profilés de raccordement (222, 224) prévus au niveau des bords longitudinaux (212, 214), chaque profilé de raccordement (222, 224) permettant un raccordement à un bord longitudinal d'un autre module de toit
**caractérisé en ce que** des profilés de raccordement (226, 228) sont également prévus au niveau des bords transversaux (216, 218), et **en ce que** tous les profilés de raccordement, au niveau à la fois des bords longitudinaux et transversaux, sont agencés pour fournir des raccordements étanches à l'eau entre les modules de toit (102).

2. Module de toit concentrateur d'énergie solaire selon la revendication 1,
dans lequel les premier (212) et deuxième (214) bords longitudinaux du module de toit (102) sont parallèles à l'axe focal (206) et les premier (216) et deuxième (218) bords transversaux du module de toit (102) sont perpendiculaires aux bords longitudinaux (212, 214).

3. Module de toit concentrateur d'énergie solaire selon la revendication 1 ou 2,
dans lequel les profilés de raccordement (222, 224) prévus au niveau des bords longitudinaux comportent un profilé à languette (222) au niveau du premier bord longitudinal (212) et un profilé à rainures (224) au niveau du deuxième bord longitudinal (214).

4. Module de toit concentrateur d'énergie solaire selon la revendication 1,
dans lequel les profilés de raccordement (226, 228) prévus au niveau des bords transversaux (216, 218) comportent un profilé à languette (226) au niveau du premier bord transversal (216) et un profilé à rainures (228) au niveau du deuxième bord transversal (218).

5. Module de toit concentrateur d'énergie solaire selon l'une des revendications 1 à 4,
dans lequel le dispositif réflecteur (204) comporte une feuille ou un revêtement réfléchissant(e) sur sa surface supérieure.

6. Module de toit concentrateur d'énergie solaire selon la revendication 5,
dans lequel la feuille ou le revêtement réfléchissant(e) comporte une feuille amovible, attachée à la surface supérieure du dispositif réflecteur (204) au moyen de lèvres saillantes (232, 234) agencées au niveau des premier (212) et deuxième (214) bords longitudinaux.

7. Module de toit concentrateur d'énergie solaire selon l'une des revendications 1 à 6,
dans lequel le dispositif de support (202) comporte des pieds prévus au niveau de la face inférieure du dispositif réflecteur (204).

8. Module de toit concentrateur d'énergie solaire selon la revendication 7,
dans lequel les pieds sont prévus au niveau de coins respectifs du module de toit (102).

9. Module de toit concentrateur d'énergie solaire selon l'une des revendications 1 à 8,
comprenant en outre un dispositif de support supplémentaire (402) prévu sous le dispositif réflecteur (204), le dispositif de support supplémentaire pouvant être attaché de façon amovible à la surface inférieure du dispositif réflecteur (204).

10. Module de toit concentrateur d'énergie solaire selon l'une des revendications 1 à 9,
dans lequel une bande protectrice (238) est prévue au niveau du côté supérieur du dispositif réflecteur (204), le long du bord longitudinal (214), agencée pour supporter un couvercle protecteur.

11. Module de toit concentrateur d'énergie solaire selon l'une des revendications 1 à 10,
dans lequel l'au moins un dispositif de retenue de tuyaux (208) comporte un premier dispositif de retenue de tuyaux agencé au niveau du premier bord transversal (216) du module de toit et facultativement un deuxième dispositif de retenue de tuyaux agencé au niveau du deuxième bord transversal (218) du module de toit.

12. Système de conversion d'énergie solaire pour un toit, comprenant une pluralité de modules de toit (102) concentrateurs d'énergie solaire selon l'une des revendications 1 à 11 reliés entre eux,
une pluralité de tuyaux attachés aux dispositifs de retenue de tuyaux des modules de toit (102), la pluralité de tuyaux étant reliés fluidiquement entre eux et remplis d'un milieu chauffant, la pluralité de tuyaux étant en outre raccordés fluidiquement à un échangeur de chaleur et
facultativement à une pompe, pour donner un circuit de fluide fermé.

13. Système de conversion d'énergie solaire selon la revendication 12,
comprenant en outre au moins un module terminal (702, 704) qui comporte un raccordement de tuyaux pour fournir une liaison fluidique entre les sections de tuyau d'un premier module de toit et d'un deuxième module de toit, les premier et deuxième modules de toit étant reliés entre eux au niveau de leurs bords longitudinaux.

14. Système de conversion d'énergie solaire selon l'une des revendications 12 ou 13,
comprenant en outre un couvercle protecteur transparent, agencé sur le côté supérieur des modules de toit.

15. Système de conversion d'énergie solaire selon la revendication 14,
dans lequel le couvercle protecteur transparent comporte au moins une lentille de Fresnel.
